# EUROPÄISCHE PATENTSCHRIFT

(11) **EP 3 387 227 B1**
(45) Veröffentlichungstag und Bekanntmachung des Hinweises auf die Patenterteilung: **04.11.2020**
(21) Anmeldenummer: 16806145.5
(22) Anmeldetag: 07.12.2016
(51) Int. Cl.: F01N 3/20

(54) **TANKSYSTEM FÜR EIN REDUKTIONSMITTEL**
TANK SYSTEM FOR A REDUCING AGENT
SYSTÈME DE RÉSERVOIR POUR UN AGENT DE RÉDUCTION

(30) Priorität: 10.12.2015 DE 102015224923
(43) Veröffentlichungstag der Anmeldung: 17.10.2018
(73) Patentinhaber: Vitesco Technologies GmbH, 30165 Hannover (DE)
(72) Erfinder: BRÜCK, Rolf, 51429 Bergisch Gladbach (DE)
(86) Internationale Anmeldenummer: PCT/EP2016/080019
(87) Internationale Veröffentlichungsnummer: WO 2017/097810

(56) Entgegenhaltungen:
- EP-A2- 2 336 515
- WO-A1-2015/036290
- DE-A1-102010 029 594
- DE-A1-102011 006 105
- DE-A1-102012 219 038

## Beschreibung

Gegenstand der Erfindung ist ein Tanksystem für ein Reduktionsmittel, umfassend einen Behälter für das Reduktionsmittel mit einer oberen Behälterwandung, seitlichen Behälterwandungen und einer unteren Behälterwandung, eine Fördervorrichtung, um das Reduktionsmittel anzusaugen und unter Druck über einen Auslass einem Abgas zuführbar bereitzustellen.

Es ist bekannt, Reduktionsmittel den Abgasen von Kraftfahrzeugen zuzugeben, um unerwünschte Bestandteile des Abgases, insbesondere Stickoxidverbindungen, zu reduzieren, indem sie in andere Verbindungen, wie Stickstoff, Wasser und Kohlendioxid umgewandelt werden. Als Reduktionsmittel wird hierbei Harnstofflösung verwendet, die auch unter dem Handelsnamen AdBlue erhältlich ist. Für die Bereitstellung und Bevorratung der Harnstofflösung ist in Kraftfahrzeugen ein Behälter vorgesehen. Dieser ist mit einer Fördervorrichtung verbunden. Die Fördervorrichtung besteht aus einer Pumpe, die das Reduktionsmittel ansaugt und unter Druck in eine Förderleitung abgibt. Über die Förderleitung gelangt die Harnstofflösung zu einer Einspritzvorrichtung, welche die Harnstofflösung in eine Abgasleitung und das darin strömende Abgas einspritzt. Die Fördervorrichtung weist weitere Komponenten, wie Füllstandsgeber, Sensoren, Filter und Heizvorrichtungen auf, die für den sicheren und zuverlässigen Betrieb des Tanksystems vorgesehen sind.

Es ist weiter bekannt, im Behälter eine Öffnung einzubringen, um die Fördervorrichtung im Innern des Behälters anzuordnen. Mittels eines Flansches ist die Öffnung im Behälter verschließbar. Über einen in den Flansch integrierten Auslass wird die von der Fördervorrichtung geförderte Harnstofflösung aus dem Behälter heraus und zur Abgasleitung geführt. Nachteilig ist, dass bei einer Anordnung der Fördervorrichtung durch eine Öffnung im Boden des Behälters eine vollständige Entleerung des Behälters nicht möglich ist. Selbst wenn die Fördervorrichtung bis auf wenige Millimeter Füllstandhöhe im Behälter diesen entleeren kann, verbleibt aufgrund der Bodenfläche ein erhebliches, nicht förderbares Restvolumen im Behälter.

Die DE 10 2012 219038 A1 offenbart eine Einrichtung zum Bereitstellen einer Flüssigkeit, insbesondere eines flüssigen Abgasnachbehandlungsmittels, mit einem Tank zur Aufnahme und Lagerung der Flüssigkeit und mit einer Mikrowelleneinrichtung, die zum Auftauen oder Erwärmen der Flüssigkeit wenigstens eine Abstrahlvorrichtung zum Abstrahlen von Mikrowellen in den Tank aufweist. Dabei ist vorgesehen, dass die Mikrowelleneinrichtung mindestens ein in dem Tank angeordnetes Absorptionselement aufweist, das die von der Abstrahlvorrichtung abgestrahlten Mikrowellen zumindest zum Teil absorbiert und in Wärme umwandelt.

Die DE 10 2011 006105 A1 offenbart eine Funktionseinheit für einen Reduktionsmittel-Vorratstank, wobei das Reduktionsmittel vorzugsweise eine wässrige Harnstofflösung zur Nachbehandlung von Abgasen aus einem Verbrennungsmotor ist, umfassend eine Heizvorrichtung. Erfindungsgemäß umfasst die Funktionseinheit ferner einen Wärmeverteiler mit wenigstens einem Hohlraum zur Aufnahme wenigstens eines Heizelementes der Heizvorrichtung und/oder wenigstens einer weiteren Komponente, wie beispielsweise eine Pumpe und/oder ein Füllstandsensor. Des Weiteren betrifft die Erfindung einen Reduktionsmittel-Vorratstank mit einer solchen Funktionseinheit.

Die WO 2015/036290 A1 offenbart ein Modul für die Lieferung von Flüssigkeiten, bestehend aus einer Grundplatte, die durch eine in einer Wand eines Flüssigkeitsbehälters ausgebildete Öffnung positioniert ist, eine Pumpeneinheit, die so konfiguriert ist, dass sie Flüssigkeit aus der Grundplatte pumpt und sie über einen Hydraulikanschluss zu einer Versorgungsleitung fördert und einen Deckel, der an der Grundplatte befestigt werden kann. Die Pumpenbaugruppe ist so ausgelegt, dass sie außerhalb des Tanks montiert ist. Der Hydraulikanschluss ist so gestaltet, dass er teilweise oder vollständig in den Deckel integriert ist.

Der Erfindung liegt daher die Aufgabe zugrunde, ein Tanksystem der eingangs genannten Art zu schaffen, mit dem eine nahezu vollständige Entleerung des Behälters möglich ist. Das Tanksystem soll dabei die Entleerung des Behälters mit geringem Aufwand ermöglichen.

Erfindungsgemäß wird die Aufgabe dadurch gelöst, dass im Bodenbereich des Behälters zumindest eine Öffnung vorgesehen ist, dass an der Außenseite des Behälters die Fördervorrichtung derart angeordnet ist, dass sie mit der Außenseite des Behälters einen Raum S bildet, wobei dieser Raum S über die zumindest eine Öffnung mit dem Innern des Behälters verbunden ist, so dass in dem Behälter befindliches Reduktionsmittel aus dem Innern des Behälters in den außerhalb des Behälters befindlichen Raum S gelangen kann und aus dem Raum S durch die Fördervorrichtung dem Abgas zuführbar ist.

Mit der Anordnung der Fördervorrichtung an der Außenseite des Behälters bildet diese mit der Außenseite einen Raum S. Der Raum S ist mit dem Inneren des Behälters über die zumindest eine Öffnung in der Behälterwandung verbunden, wobei diese Öffnung in dem Bereich des Behälterbodens angeordnet ist, wo Außenseite des Behälters und Fördervorrichtung den Raum S bilden. Die Öffnung ermöglicht das Einströmen des Reduktionsmittels in den Raum S, wo es von der Fördervorrichtung angesaugt und zur Abgasleitung des Kraftfahrzeugs gefördert werden kann. Die Anordnung der Fördervorrichtung außerhalb des Behälters erlaubt einen besonders tiefen Ansaugpunkt, so dass sich der Behälter nahezu vollständig entleeren lässt. Damit lassen sich mit dem erfindungsgemäßen Tanksystem Behälter mit sehr großem Nutzvolumen realisieren.

Um eine einfache Verbindung der Fördervorrichtung mit der Außenseite des Behälters zu gewährleisten, hat es sich als vorteilhaft herausgestellt, wenn die Fördervorrichtung einen sie umgebenden Flansch aufweist, und der Flansch zur Bildung des Raumes S mit der Außenseite des Behälters verbunden ist.

Die Verbindung der Fördervorrichtung mit der Außenseite des Behälters gestaltet sich besonders einfach, wenn die Fördervorrichtung, insbesondere deren Flansch mit dem Behälter verklebt oder verschweißt ist. Bei einer solchen flüssigkeitsdichten Verbindung können zusätzliche Dichtelemente entfallen. Das Tanksystem ist dadurch einfacher und kostengünstiger aufgebaut.

In einer anderen Ausgestaltung ist die Verbindung von Fördervorrichtung und Behälter als Bajonettverbindung ausgebildet. Hierzu weist der Flansch ein metallisches Einlegeteil auf, welches mit einem entsprechenden Gegenstück, das im Behälterboden angeordnet ist, in Eingriff gebracht wird. Der Vorteil dieser Verbindung besteht darin, dass die Fördervorrichtung insbesondere zur Reparatur und/oder Wartung ohne zusätzlichen Aufwand vom Behälter getrennt und anschließend wieder flüssigkeitsdicht mit ihm verbunden werden kann.

Um auch bei gefülltem Behälter die Zugänglichkeit zu allen oder einige Komponenten zu gewährleisten, hat es sich als vorteilhaft erwiesen, dass die Fördervorrichtung ein Gehäuse umfasst, in dem diese Komponenten angeordnet sind. Das Gehäuse ist zu diesem Zweck mit einem Deckel oder einer Abdeckung versehen. Die Zugänglichkeit ist somit unabhängig vom Füllstand im Behälter, auch ein Ausbau des Behälters ist nicht erforderlich.

In einer vorteilhaften Ausgestaltung sind in dem Bereich des Behälters, der mit der Fördervorrichtung den Raum S bildet 2 bis 20 Öffnungen, vorzugsweise 2 bis 10 Öffnungen, insbesondere 2 bis 4 Öffnungen angeordnet. Der Vorteil besteht darin, dass in Abhängigkeit vom Tanksystem und den Randbedingungen die Anzahl der Öffnungen optimal abgestimmt werden kann. Das Vorsehen weniger Öffnungen kommt insbesondere dann zum Tragen, wenn der Aufwand für die Herstellung des Behälters gering gehalten werden soll. Das Anordnen mehrerer Öffnungen gewährleistet dagegen unter allen möglichen Betriebsbedingungen, insbesondere das Fahrverhalten, ein zuverlässiges Hindurchtreten des Reduktionsmittels aus dem Behälter heraus in den Raum S. Während bei wenigen Öffnungen der überwiegende Teil in unmittelbarer Nähe des Bodens angeordnet ist, können bei einer größeren Anzahl von Öffnungen einige der Öffnungen in einem größeren Abstand zum Boden des Behälters angeordnet werden.

Mit der Anordnung in unmittelbarer Nähe des Bodens wird ermöglicht, den Behälter nahezu vollständig zu entleeren. Sofern mehrere Öffnungen vorhanden sind wird zusätzlich sichergestellt, dass auch bei einem Ausfall einer Öffnungen, z. B. Verstopfen, ein sicheres Überströmen aus dem Behälter heraus in den Raum S gewährleistet ist.

In einer besonders einfachen Ausgestaltung sind alle Öffnungen gleich groß. Dies ermöglicht eine besonders einfache Gestaltung der Werkzeuge für die Herstellung des Behälters. In einer anderen vorteilhaften Ausgestaltung ist zumindest eine Öffnung größer als zumindest eine andere Öffnung. Das Vorsehen zumindest einer größeren Öffnung hat den Vorteil, dass auf diese Weise der Behälter an spezielle Anforderungen des Tanksystems und/oder der Fördervorrichtung angepasst werden kann. Insbesondere bei einem in die Fördervorrichtung integrierten Füllstandssensor ist das von Vorteil, da durch die größere Öffnung störende Beeinflussungen bei der Füllstandsbestimmung, beispielsweise bei der Schallausbreitung eines Ultraschallsensors verhindert oder zumindest soweit minimiert werden, dass sie das Messergebnis nicht beeinflussen. Auf den Einsatz eines Schallführungsrohres kann daher verzichtet werden.

Die Anpassung der Öffnungen hinsichtlich der Schallführung lässt sich gemäß einer weiteren Ausgestaltung dadurch vermeiden, indem als Füllstandssensor ein anderer Sensor, z. B. ein kapazitiver Sensor oder ein Reed-Kontaktsensor vorgesehen ist. derartige Sensoren haben den Vorteil, dass sie sich nahezu über die gesamte Höhe des Behälters erstrecken und dabei nur einen geringen Durchmesser aufweisen. Sie lassen sich daher gut in die Fördervorrichtung im Raum S integrieren, von dem aus sie sich durch eine Öffnung im Tankboden ins Innere des Behälters erstrecken. Die Öffnung müsste dabei nicht gesondert ausgebildet sein.

Im Hinblick auf eine einfache Herstellung sind die Öffnungen kreisrund. Es ist aber ebenso denkbar, dass zumindest eine der Öffnungen eine von der Kreisform abweichende Gestalt aufweist. Die Öffnung kann an einen Teil der Fördervorrichtung so angepasst sein, dass dieser Teil aus dem Raum S durch die Öffnung in den Behälter hineinragt oder so in dem Raum S positioniert ist, dass er sich unter dieser Öffnung befindet. Die Öffnungen können weiter eine Polygonform, vorzugsweise viereckig, aufweisen.

Die Aufgabe der Öffnungen besteht darin, ausreichend Reduktionsmittel aus dem Behälter in den außerhalb des Behälters befindlichen Raum S durchtreten zu lassen. Um dies zu gewährleisten, muss der Querschnitt aller Öffnungen ausreichend groß. Ein Maß für die Querschnittsfläche ist die Porosität des Bereichs des Behälters, der mit der Fördervorrichtung den Raum S bildet. Die Porosität ergibt sich aus dem Anteil der Querschnittsflächen aller Öffnungen zur Gesamtfläche dieses Behälterbereichs. Die Porosität kann dabei 98 % bis 2 %, vorzugsweise 80 % bis 4 % und insbesondere 50 % bis 6 % betragen. Bei großen Flächen des Behälterbereichs ist die Porosität kleiner und bei kleineren Flächen größer.

In einer anderen Ausgestaltung weist der Bereich des Behälters, der mit der Fördervorrichtung den Raum S bildet, zumindest eine in das Innere des Behälters gerichtete Einstülpung auf. Das hat den Vorteil, dass die Fördervorrichtung in diese Einstülpung eintauchen kann, wobei sie aber immer noch außerhalb des Behälters angeordnet ist. Aufgrund dieser Anordnung wird es ermöglicht, dass die Fördervorrichtung vollständig in der Einstülpung angeordnet werden kann. Ein derartiges Tanksystem benötigt daher einen geringeren Bauraum als ein vergleichbarer Behälter mit einer unteren Behälterwandung ohne Einstülpung.

In besonders vorteilhafter Weise sind die Einstülpungen an die Fördervorrichtung angepasst, indem sie bezogen auf den Füllstand unterschiedliche Höhen aufweisen.

Im einfachsten Fall sind die Öffnungen gleichmäßig verteilt in dem Bereich des Behälters angeordnet, der mit der Fördervorrichtung den Raum S bildet.

In Abhängigkeit von den funktionalen Teileinheiten der Fördervorrichtung kann es vorteilhaft sein, die Öffnungen ungleichmäßig verteilt in dem Bereich des Behälters, der mit der Fördervorrichtung den Raum S bildet, anzuordnen.

In einer weiteren vorteilhaften Ausgestaltung liegen Bereiche der Fördervorrichtung innerhalb des Raumes S an der Außenseite des Behälters an, wodurch das Volumen des Raumes S klein gehalten wird. Das ist insbesondere dann von Vorteil, wenn das im Raum S befindliche Reduktionsmittel eingefroren ist, da die zum Auftauen notwendige Heizvorrichtung kleiner dimensioniert werden kann.

Sind zumindest die Bereiche, in denen die Fördervorrichtung innerhalb des Raumes S an der Außenseite des Behälters anliegt, mit einer Heizvorrichtung versehen, hat das den Vorteil, dass dadurch das Erwärmen der Behälterwandung ermöglicht wird. Im Innern des Behälters befindliches Reduktionsmittel lässt sich dadurch ohne zusätzlich im Behälter integrierte Heizvorrichtung auftauen und für die Abgasnachbehandlung nutzen. Die Heizvorrichtung kann dabei ein Heizelement oder mehrere Heizelemente umfassen.

An mehreren Ausführungsbeispielen wird die Erfindung näher erläutert. Es zeigen in
- Fig. 1: eine schematische Darstellung des erfindungs gemäßen Tanksystems,
- Fig. 2: eine Draufsicht auf den Boden des Behälters nach Fig. 1,
- Fig. 3, 5, 6: weitere Ausführungsformen nach Fig. 1,
- Fig. 4, 7: weitere Ausführungsformen nach Fig. 2.

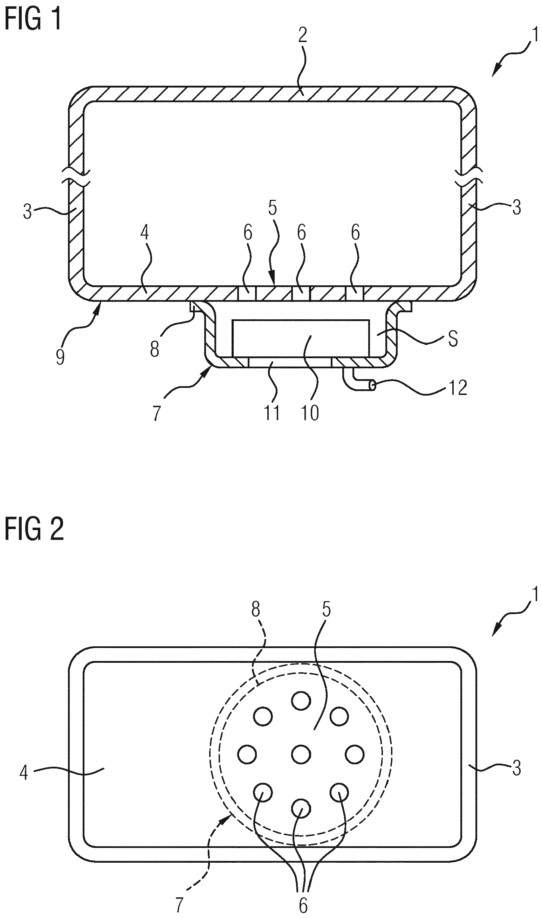

Figur 1 zeigt ein Tanksystem mit einem Behälter 1, der in Einbaulage eine obere Behälterwandung 2, einen nicht dargestellten Einfüllabschnitt für das Reduktionsmittel, seitliche Behälterwandungen 3 und eine untere Behälterwandung 4 besitzt. Die untere Behälterwandung 4 bildet den Boden des Behälters 1. Der Behälter 1 besteht aus Kunststoff. Es ist aber auch denkbar, den Behälter aus Metall herzustellen. In einem ebenen Bodenbereich 5 der unteren Behälterwandung 4 sind Öffnungen 6 angeordnet. Außerhalb des Behälters 1 befindet sich eine Fördervorrichtung 7. Die Fördervorrichtung 7 besitzt einen sie umgebenden Flansch 8, der mit der Außenseite 9 des Behälters 1 verschweißt ist. Die Fördervorrichtung 7 umschließt zusammen mit der Außenseite 9 des Behälters 1 ein Volumen, so dass Fördervorrichtung 7 und Außenseite 9 einen Raum S bilden. Der Behälter 1 wird somit nicht von der Fördervorrichtung 7 durchdrungen. Durch die Öffnungen 6 in der unteren Behälterwandung 4 ist der Raum S mit dem Inneren des Behälters 1 verbunden. Dadurch kann im Innern des Behälters gelagerte Harnstofflösung durch die Behälterwandung 4 nach außen in den Raum S fließen. Die Fördervorrichtung 7 besitzt ein Gehäuse 10, in oder an dem verschiedene nicht weiter dargestellte Komponenten, z.B. eine Pumpe, Druckregler, Heizvorrichtungen, Filter, Füllstands- und Qualitätssensoren angeordnet sein können. Das Gehäuse 10 umfasst weiter einen Deckel 11, der das Gehäuse 10 verschließt. Mittels der Pumpe kann die im Raum S befindliche Harnstofflösung angesaugt und über einen Auslass 12 unter Druck in eine Förderleitung einer Abgasleitung zugeführt werden, in der die Harnstofflösung dem Abgas beigemischt wird. Aufgrund der exponierten Lage der Fördervorrichtung 7 an der Außenseite des Behälters 1 ist der Raum S anfälliger für Temperatureinwirkungen. Insbesondere bei tiefen Temperaturen friert der Raum S vor dem angrenzenden Volumen im Innern des Behälters 1 ein. Die damit einhergehende Volumenvergrößerung im Raum S führt dazu, dass sich das Volumen aufgrund der Öffnungen 6 in Richtung der Behälters 1 ausdehnen kann, wodurch kritische Spannungen im Raum S und damit in der Fördervorrichtung vermieden werden.

Figur 2 zeigt das Innere des Behälters 1 mit einer Draufsicht auf die untere Behälterwandung 4. Der Bodenbereich 5 des Behälters 1 weist insgesamt 10 gleichgroße Öffnungen 6 auf, über die die Harnstofflösung aus dem Innern des Behälters 1 in den darunter liegenden Raum S fließen kann. Der Bodenbereich besitzt eine Porosität von ungefähr 10 %. Der Bodenbereich 5 wird von dem als Strichlinie dargestellten Flansch 8 der Fördervorrichtung 7 begrenzt.

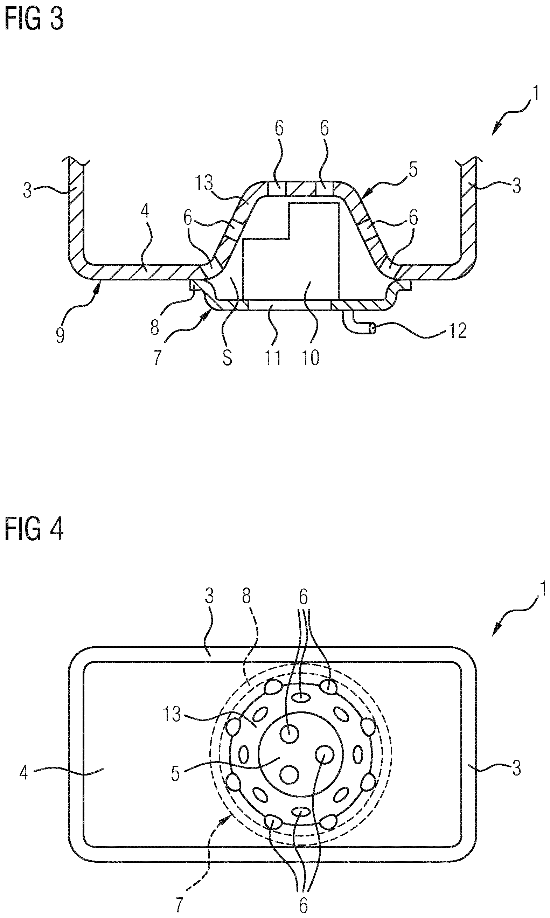

Der Behälter in Figur 3 weist einen ähnlichen Aufbau wie in Figur 1 auf. Der Bodenbereich 5 ist als in Innere des Behälters 1 gerichtete Einstülpung 13 ausgebildet. Aufgrund dieser Einstülpung 13 ist das Volumen des Behälters 1 kleiner als bei einer ebenen Ausgestaltung des Bodenbereichs 5 wie in Figur 1. An der Außenseite 9 des Behälters 1 ist im Bodenbereich 5 die Fördervorrichtung 7 angeordnet, deren Flansch 8 mit der Außenseite 9 verschweißt ist, so dass Fördervorrichtung 7 und Außenseite 9 des Behälters 1 den Raum S bilden. Die Verbindung des Raumes S mit dem Innern des Behälters erfolgt über Öffnungen 6, die über die Einstülpung 13 verteilt angeordnet sind, Aufgrund dieser Verteilung sind die Öffnungen 6 in verschiedenen Abständen zur unteren Behälterwandung 4 angeordnet. Das Gehäuse 10 mit den darin angeordneten Komponenten erstreckt sich in Richtung des Behälters 1, und ragt somit in den von der Einstülpung 13 ausgenommen Bereich hinein. Damit benötigt das Tanksystem nach unten weniger Bauraum. Die Fördervorrichtung 7 ist dabei wie in Figur 1 weiterhin vollständig außerhalb des Behälters 1 angeordnet. Für eine einfachere Herstellung des Behälters 1 infolge einer besseren Entformbarkeit ist die Einstülpung 13 konisch ausgebildet.

In Figur 4 ist die untere Behälterwandung 4 in einer Draufsicht mit der Einstülpung 13 gezeigt. Die Einstülpung 13 besitzt eine Reihe von Öffnungen 6, wobei mehr Öffnungen 6 nahe der Behälterwandung 4 und weniger Öffnungen im Zentrum der Einstülpung 13 angeordnet sind. Die radial außen liegenden Öffnungen 6 nahe der unteren Behälterwandung 4 besitzen eine kleinere Querschnittsfläche als die radial innen liegenden Öffnungen 6. Durch die vielen kleineren Öffnungen wird ein Überströmen der Harnstofflösung in den Raum S aus jeder Anströmrichtung auch bei nahezu leerem Behälter ermöglicht. Die größeren Öffnungen 6 ermöglichen dagegen bei einem Einfrieren des Raumes S eine Ausdehnung der einfrierenden Harnstofflösung aus dem Raum S in den Behälter 1 hinein, so dass insbesondere auf den Flansch 8 wirkende Spannungen minimiert werden. Diese Spannungen lassen sich auch dadurch minimieren, dass der Bodenbereichs 5 mit Abstand zu den seitlichen Behälterwandungen 3 positioniert ist. Die zwischen Bodenbereich 5 und Behälterwandung 3 liegenden Bereiche der unteren Behälterwandung 4 besitzen dadurch eine gewisse Beweglichkeit, die es erlaubt, auf Volumenänderungen der einfrierenden Harnstofflösung reagieren zu können.

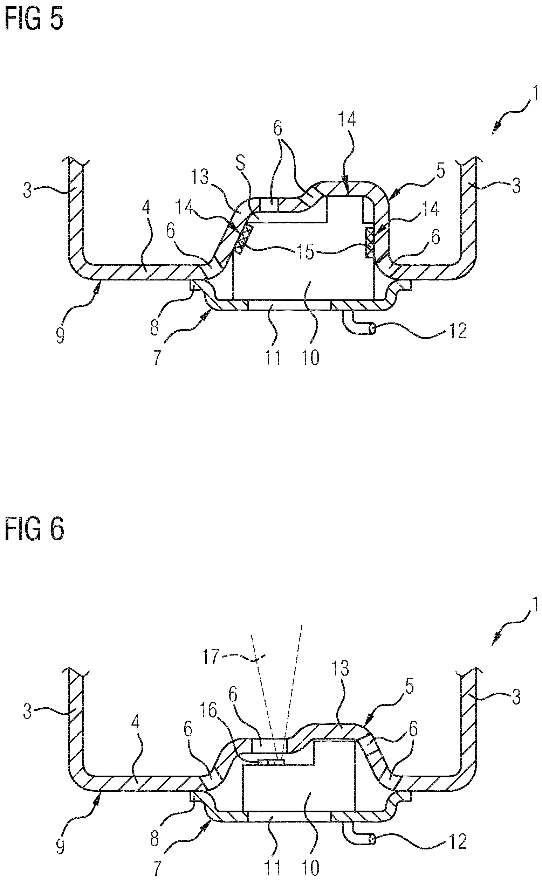

Das Tanksystem in Figur 5 unterscheidet sich von Figur 3 dadurch, dass die Einstülpung 13 zwei verschiedene und somit mehrere Höhen in Bezug auf die untere Behälterwandung 4 aufweisen, um den Behälter 1 an die Form der Fördervorrichtung 7 anzupassen. Dadurch kann der Raum S klein gehalten werden. Weiter sind Einstülpung 13 und Fördervorrichtung 7 derart aneinander angepasst, dass Bereiche 14 der Fördervorrichtung 7 innerhalb des Raumes S an der Außenseite 9 des Behälters 1 anliegen. Mithilfe einer in diesen Bereichen angeordneten Heizvorrichtung 15 wird in Einfrieren der im Raum S befindliche Harnstofflösung verhindert oder es lässt sich gefrorene Harnstofflösung auftauen. Aufgrund des Kontaktes der Bereiche 14 mit dem Bodenbereich 5 wird auch der untere Behälterboden 4 erwärmt, so dass auch im Innern des Behälters 1 befindliche Harnstofflösung gleichfalls geschützt wird. Der Kontakt der Bereiche 14 mit der Außenseite 9 ist unabhängig vom Vorhandensein einer Heizvorrichtung 15. Ebenso kann eine Heizvorrichtung 15 zum Erwärmen der Harnstofflösung im Raum S vorgesehen sein, ohne dass diese Bereiche 14 in Kontakt mit der Außenseite 9 des Behälters 1 stehen. Die Heizvorrichtung 15 kann zudem ein oder mehrere aktive Heizelemente und gegebenenfalls eine Wärmeleitstruktur zum Wärmetransport aufweisen.

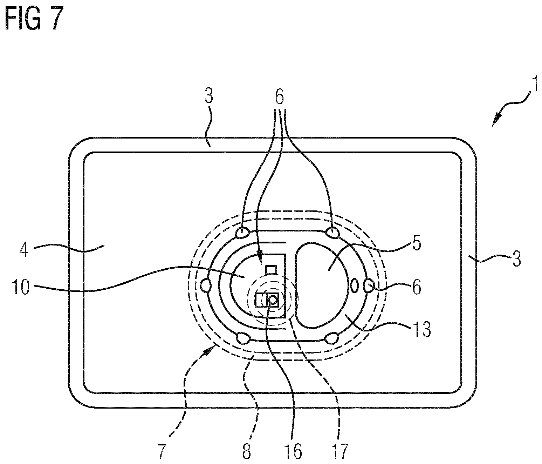

Die Figuren 6 und 7 zeigen eine Abwandlung des Tanksystems nach den vorherigen Figuren, bei der eine halbkreisförmige Öffnung 6 etwa die 20-fache Querschnittsfläche gegenüber den anderen Öffnungen 6 besitzt. Ein als Ultraschallsensor 16 ausgebildeter Füllstandssensor ist unterhalb der Öffnung 6 so an der Fördervorrichtung 7 angeordnet, dass das von ihm ausgesandten und zurückreflektierte Ultraschallsignal 17 durch die Öffnung 6 hintreten kann, ohne dass es zu Störungen bei Signalabgabe und Signalempfang durch den Ultraschallsensor 16 aufgrund der Öffnung 6 kommt.

## Patentansprüche

1. Tanksystem für ein Reduktionsmittel, umfassend einen Behälter für das Reduktionsmittel mit einer oberen Behälterwandung, seitlichen Behälterwandungen und einer unteren Behälterwandung, eine Fördervorrichtung, um das Reduktionsmittel unter Druck über einen Auslass einem Abgas zuführbar bereitzustellen, wobei im Bodenbereich (5) des Behälters (1) zumindest eine Öffnung (6) vorgesehen ist, dass an der Außenseite (9) des Behälters (1) die Fördervorrichtung (7) derart angeordnet ist, dass sie mit der Außenseite (9) des Behälters (1) einen Raum S bildet, wobei dieser Raum S über die zumindest eine Öffnung (6) mit dem Innern des Behälters (1) verbunden ist, so dass in dem Behälter (1) befindliches Reduktionsmittel aus dem Innern des Behälters (1) in den außerhalb des Behälters (1) befindlichen Raum S gelangen kann und aus dem Raum S durch die Fördervorrichtung (7) dem Abgas zuführbar ist, **dadurch gekennzeichnet, dass** der Raum S derart am Behälter (1) angeordnet ist, dass eine fast vollständige Entleerung des Behälters (1) ermöglicht ist, wobei dies durch die besonders tiefe Lage des Ansaugpunktes im Raum S gegenüber dem Behälterboden (5) ermöglicht ist.

2. Tanksystem nach Anspruch 1, **dadurch gekennzeichnet, dass** die Fördervorrichtung (7) einen sie umgebenden Flansch (8) aufweist, und der Flansch (8) zur Bildung des Raumes S mit der Außenseite (9) des Behälters (1) verbunden ist.

3. Tanksystem nach Anspruch 1 oder 2, **dadurch gekennzeichnet, dass** 2 bis 20 Öffnungen (6), vorzugsweise 2 bis 10 Öffnungen (6), insbesondere 2 bis 4 Öffnungen (6) in dem Bereich (5) des Behälters (1), der mit der Fördervorrichtung (7) den Raum S bildet, angeordnet sind.

4. Tanksystem nach Anspruch 3, **dadurch gekennzeichnet, dass** alle Öffnungen (6) gleich groß sind.

5. Tanksystem nach Anspruch 3, **dadurch gekennzeichnet, dass** zumindest eine Öffnung (6) größer als zumindest eine andere Öffnung (6) ist.

6. Tanksystem nach zumindest einem der vorhergehenden Ansprüche 3 bis 5, **dadurch gekennzeichnet, dass** zumindest eine Öffnung (6) eine von der Kreisform abweichende Gestalt aufweist.

7. Tanksystem nach zumindest einem der vorhergehenden Ansprüche, **dadurch gekennzeichnet, dass** der Bereich (5) der Behälters (1), der mit der Fördervorrichtung (7) den Raum S bildet eine Porosität von 98 % bis 2 %, vorzugsweise 80 % bis 4 %, insbesondere 50 % bis 6 %, aufweist.

8. Tanksystem nach zumindest einem der vorhergehenden Ansprüche, **dadurch gekennzeichnet, dass** der Bereich (5) des Behälters (1), der mit der Fördervorrichtung (7) den Raum S bildet, zumindest eine in das Innere des Behälters (1) gerichtete Einstülpung (13) aufweist.

9. Tanksystem nach Anspruch 8, **dadurch gekennzeichnet, dass** die Einstülpungen (13) bezogen auf die untere Behälterwandung (4) unterschiedliche Höhen aufweisen.

10. Tanksystem nach zumindest einem der vorhergehenden Ansprüche, **dadurch gekennzeichnet, dass** die Öffnungen (6) gleichmäßig verteilt in dem Bereich (5) des Behälters (1), der mit der Fördervorrichtung (7) den Raum S bildet, angeordnet sind.

11. Tanksystem nach zumindest einem der vorhergehenden Ansprüche 1 bis 9, **dadurch gekennzeichnet, dass** die Öffnungen (6) ungleichmäßig verteilt in dem Bereich (5) des Behälters (1), der mit der Fördervorrichtung (7) den Raum S bildet, angeordnet sind.

12. Tanksystem nach zumindest einem der vorhergehenden Ansprüche 8 bis 11, **dadurch gekennzeichnet, dass** Bereiche (14) der Fördervorrichtung (7) innerhalb des Raumes S an der Außenseite (9) des Behälters (1) anliegen.

13. Tanksystem nach Anspruch 12, **dadurch gekennzeichnet, dass** zumindest in den Bereichen (14), in denen die Fördervorrichtung (7) innerhalb des Raumes S an der Außenseite (9) des Behälters (1) anliegt, eine Heizvorrichtung (15) vorgesehen ist.

## Claims

1. Tank system for a reducing agent, comprising a vessel for the reducing agent, having an upper vessel wall, lateral vessel walls, and a lower vessel wall, and comprising a conveying device in order for the reducing agent to be provided so as to be suppliable under pressure by way of an outlet to an exhaust gas, wherein at least one opening (6) is provided in the base region (5) of the vessel (1), wherein the conveying device (7) is disposed on the outer side (9) of the vessel (1) in such a manner that said conveying device (7) conjointly with the outer side (9) of the vessel (1) forms a space S, wherein said space S by way of the at least one opening (6) is connected to the interior of the vessel (1) such that reducing agent located in the vessel (1) can make its way from the interior of the vessel (1) into the space S located outside the vessel (1) and by way of the conveying device (7) is suppliable from the space S to the exhaust gas, **characterized in that** the space S is disposed on the vessel (1) in such a manner that almost complete emptying of the vessel (1) is enabled, wherein the latter is enabled by the particularly low position of the suction point in the space S in relation to the vessel base (5).

2. Tank system according to Claim 1, **characterized in that** the conveying device (7) has a flange (8) surrounding the latter, and the flange (8) is connected to the outer side (9) of the vessel (1) for forming the space S.

3. Tank system according to Claim 1 or 2, **characterized in that** 2 to 20 openings (6), preferably 2 to 10 openings (6), in particular 2 to 4 openings (6), are disposed in the region (5) of the vessel (1) which conjointly with the conveying device (7) forms the space S.

4. Tank system according to Claim 3, **characterized in that** all openings (6) are of identical size.

5. Tank system according to Claim 3, **characterized in that** at least one opening (6) is larger than at least one other opening (6).

6. Tank system according to at least one of preceding Claims 3 to 5, **characterized in that** at least one opening (6) has a design that deviates from the circular shape.

7. Tank system according to at least one of the preceding claims, **characterized in that** the region (5) of the vessel (1) which conjointly with the conveying device (7) forms the space S has a porosity of 98% to 2%, preferably 80% to 4%, in particular 50% to 6%.

8. Tank system according to at least one of the preceding claims, **characterized in that** the region (5) of the vessel (1) which conjointly with the conveying device (7) forms the space S has at least one inversion (13) that is directed into the interior of the vessel (1).

9. Tank system according to Claim 8, **characterized in that** the inversions (13) in relation to the lower vessel wall (4) have dissimilar heights.

10. Tank system according to at least one of the preceding claims, **characterized in that** the openings (6) are disposed in a manner distributed uniformly in the region (5) of the vessel (1) which conjointly with the conveying device (7) forms the space S.

11. Tank system according to at least one of preceding Claims 1 to 9, **characterized in that** the openings (6) are disposed in a manner distributed non-uniformly in the region (5) of the vessel (1) which conjointly with the conveying device (7) forms the space S.

12. Tank system according to at least one of preceding Claims 8 to 11, **characterized in that** regions (14) of the conveying device (7) within the space S bear on the outer side (9) of the vessel (1).

13. Tank system according to Claim 12, **characterized in that** a heating device (15) is provided at least in the regions (14) in which the conveying device (7) within the space S bears on the outer side (9) of the vessel (1).

## Revendications

1. Système de réservoir pour un réducteur, comprenant un contenant pour le réducteur doté d'une paroi de contenant supérieure, de parois de contenant latérales et d'une paroi de contenant inférieure, un dispositif de transport pour fournir le réducteur sous pression de manière à pouvoir être acheminé jusqu'à un gaz d'échappement par le biais d'une sortie, au moins une ouverture (6) étant prévue dans la zone de fond (5) du contenant (1), le dispositif de transport (7) étant agencé sur le côté extérieur (9) du contenant (1) de telle sorte qu'il forme avec le côté extérieur (9) du contenant (1) une chambre S, cette chambre S étant reliée avec l'intérieur du contenant (1) par le biais de ladite au moins une ouverture (6), de telle sorte que le réducteur se trouvant dans le contenant (1) puisse parvenir, à partir de l'intérieur du contenant (1), dans la chambre S se trouvant à l'extérieur du contenant (1) et puisse être acheminé au gaz d'échappement à partir de la chambre S par le dispositif de transport (7), **caractérisé en ce que** la chambre S est agencée sur le contenant (1) de telle sorte qu'un vidage presque total du contenant (1) soit possible, ceci étant permis par la position particulièrement basse du point d'aspiration dans la chambre S par rapport au fond de contenant (5) .

2. Système de réservoir selon la revendication 1, **caractérisé en ce que** le dispositif de transport (7) comprend une bride (8) qui l'entoure, et la bride (8) est reliée avec le côté extérieur (9) du contenant (1) pour la formation de la chambre S.

3. Système de réservoir selon la revendication 1 ou 2, **caractérisé en ce que** 2 à 20 ouvertures (6), de préférence 2 à 10 ouvertures (6), notamment 2 à 4 ouvertures (6), sont agencées dans la zone (5) du contenant (1), qui forme la chambre S avec le dispositif de transport (7).

4. Système de réservoir selon la revendication 3, **caractérisé en ce que** toutes les ouvertures (6) sont de même taille.

5. Système de réservoir selon la revendication 3, **caractérisé en ce qu'**au moins une ouverture (6) est plus grande qu'au moins une autre ouverture (6).

6. Système de réservoir selon au moins l'une quelconque des revendications 3 à 5, **caractérisé en ce qu'**au moins une ouverture (6) présente une forme différente de la forme circulaire.

7. Système de réservoir selon au moins l'une quelconque des revendications précédentes, **caractérisé en ce que** la zone (5) du contenant (1), qui forme la chambre S avec le dispositif de transport (7), présente une porosité de 98 % à 2 %, de préférence de 80 % à 4 %, notamment de 50 % à 6 %.

8. Système de réservoir selon au moins l'une quelconque des revendications précédentes, **caractérisé en ce que** la zone (5) du contenant (1), qui forme la chambre S avec le dispositif de transport (7), comprend au moins une inversion (13) dirigée dans l'intérieur du contenant (1).

9. Système de réservoir selon la revendication 8, **caractérisé en ce que** les inversions (13) présentent des hauteurs différentes par rapport à la paroi de contenant inférieure (4).

10. Système de réservoir selon au moins l'une quelconque des revendications précédentes, **caractérisé en ce que** les ouvertures (6) sont agencées réparties uniformément dans la zone (5) du contenant (1), qui forme la chambre S avec le dispositif de transport (7).

11. Système de réservoir selon au moins l'une quelconque des revendications 1 à 9 précédentes, **caractérisé en ce que** les ouvertures (6) sont agencées réparties non uniformément dans la zone (5) du contenant (1), qui forme la chambre S avec le dispositif de transport (7).

12. Système de réservoir selon au moins l'une quelconque des revendications 8 à 11 précédentes, **caractérisé en ce que** des zones (14) du dispositif de transport (7) à l'intérieur de la chambre S sont adjacentes au côté extérieur (9) du contenant (1) .

13. Système de réservoir selon la revendication 12, **caractérisé en ce qu'**un dispositif de chauffage (15) est prévu au moins dans les zones (14) dans lesquelles le dispositif de transport (7) à l'intérieur de la chambre S est adjacent au côté extérieur (9) du contenant (1).
